# EUROPÄISCHE PATENTSCHRIFT

(11) **EP 2 574 852 B1**
(45) Veröffentlichungstag und Bekanntmachung des Hinweises auf die Patenterteilung: **02.11.2016**
(21) Anmeldenummer: 12186741.0
(22) Anmeldetag: 28.09.2012
(51) Int. Cl.: F24D 3/14

(54) **Verfahren zur Herstellung großflächiger Bodenheizungen und durch dieses Verfahren hergestellte Bodenheizung**
Method for producing large-scale floor heating systems and floor heating systems produced according to this method
Procédé de fabrication de chauffages au sol de grande taille et chauffage au sol fabriqué selon ce procédé

(30) Priorität: 29.09.2011 DE 102011054069
(43) Veröffentlichungstag der Anmeldung: 03.04.2013
(73) Patentinhaber: Entsorgungstechnik Kraus Martin e.K., 92648 Vohenstrauss (DE)
(72) Erfinder: Kraus, Martin, 92648 Vohenstrauß (DE)
(74) Vertreter: Lang, Christian

(56) Entgegenhaltungen:
- EP-A1- 1 905 920
- DE-A1- 3 441 412
- DE-U1-202008 004 383
- GB-A- 1 065 365

## Beschreibung

### GEBIET DER ERFINDUNG

Die vorliegende Erfindung betrifft die Herstellung eines großflächigen, temperierbaren Bodenbelags sowohl für den Innenbereich eines Gebäudes bzw. einer Halle als auch für einen Außenbereich, d. h. einen im Freien ausgelegten Bodenbelag. Weiterhin betrifft die vorliegende Erfindung den großflächigen temperierbaren Bodenbelag selbst.

### STAND DER TECHNIK

Fußbodenheizungen in Innen- sowie Außenbereichen von Gebäuden sind seit Langem weit verbreitet. Es existiert eine Vielzahl verschiedenenartiger Bodenheizungen, wobei sich Warmwasserbodenheizungen insbesondere bei großflächigen Anwendungen als vorteilhaft darstellen. Warmwasserbodenheizungen können als sogenannte Nasssysteme ausgebildet sein. Diese werden hergestellt, indem zunächst Rohre oder Schläuche an der Baustelle auf einer Grundfläche befestigt werden und die Rohre anschließend in Fließestrich eingebettet werden, sodass eine ebene Estrichoberfläche entsteht. Problematisch bei einer solchen Herstellung ist jedoch, dass die einzelnen Rohre bzw. Schläuche per Hand verlegt und fixiert werden müssen, was einen erheblichen Zeitaufwand sowie Kostenaufwand zur Folge hat.

Daneben sind insbesondere für den Außenbereich auch elektrische Heizsysteme bekannt, die beispielsweise Widerstandsheizdrähte umfassen, sodass bei einem Stromfluss durch die Widerstandsheizdrähte Wärme erzeugt wird. Allerdings besitzen derartige Heizsysteme den Nachteil, dass elektrische Energie zur Verfügung stehen muss. Bei Heizflächen, die mittels Abwärme aus anderen Systemen beheizt werden sollen, wäre somit zu nächst eine Umwandlung der Abwärme in elektrische Energie erforderlich, was die Effizienz derartiger Heizsysteme negativ beeinflusst.

Aus der DE 3 441 412 A1 ist ein Verfahren zum Herstellen einer Fußboden- oder Innenwandheizung bekannt, bei dem in einen Oberflächenbelag Nuten oder Rillen eingeschnitten werden, um darin Heizschlangen aus Heizrohren oder elektrischen Heizleitern zu verlegen. Nachteilig bei diesem Verfahren ist, dass die Rillen oder Nuten aus einem festen, ausgehärteten Belag geschnitten oder gefräst werden müssen, was aufwändig ist. Ein ähnlicher Aufbau für eine Flächentemperierung ist in der DE 20 2008 004 383 U1 und der GB 1,065,365 A gezeigt, bei denen die Nuten ebenfalls in einem festen Bodenbelag gefräst werden.

### OFFENBARUNG DER ERFINDUNG

### AUFGABE DER ERFINDUNG

Ausgehend vom genannten Stand der Technik ist es somit die Aufgabe der vorliegenden Erfindung ein Verfahren zur Herstellung eines großflächigen temperierbaren, d. h. insbesondere beheizbaren und/oder kühlbaren, Bodenbelags zur Verfügung zu stellen, das schnell, effizient und kostengünstig durchgeführt werden kann. Des Weiteren liegt die Aufgabe der vorliegenden Erfindung in der entsprechenden Bereitstellung eines großflächigen temperierbaren Bodenbelags.

### TECHNISCHE LÖSUNG

Diese Aufgabe wird gelöst durch ein Verfahren mit den Merkmalen des Anspruchs 1 und einen großflächigen, temperierbaren Bodenbelag mit den Merkmalen des Anspruchs 8 bzw. der Verwendung desselben nach Anspruch 10. Vorteilhafte Ausgestaltungen sind Gegenstand der abhängigen Ansprüche.

Die Erfindung geht aus von der Erkenntnis, dass umgekehrt zur bisherigen Vorgehensweise mit der Anordnung einer Rohrleitung, durch welche das Heiz- oder Kühlmedium in Form eines Fluids, zum Beispiel Wasser, hindurch geleitet werden soll, und anschließendem Eingießen der Rohrleitung in das Estrichmaterial einer Estrichschicht eine effektive und vorteilhafte Verlegung einer Rohrleitung für das Heiz-/Kühlmedium nach einem ersten Aspekt der Erfindung dadurch erreicht werden kann, dass zunächst eine Estrichschicht aus einem formbaren oder fließfähigen, körnigen oder flüssigen Material gebildet wird, in welcher ein Oberflächenprofil mit einer Rille der mehreren Rillen ausgebildet wird, in welche die Rohrleitungen eingelegt werden können. Nach Herstellen einer entsprechenden Estrichschicht kann die Rohrleitung in den Rillen des Oberflächenprofils eingelegt werden und durch Aufbringen einer Verschlussschicht in der Estrichschicht fixiert werden.

Unter Estrichschicht wird bei der vorliegenden Erfindung jede Schicht verstanden, die auf einem festen Untergrund, wie beispielsweise einer Betonschicht, einer Schotterschicht oder einer festen Erdschicht, zur Ausbildung eines Bodenbelags aufgebracht wird, wobei die Estrichschicht selbst als Boden benutzt werden kann oder als Untergrund für die Auflage eines weiteren Bodenbelags aus Kunststoff, Holz, Fliesen und dergleichen dienen kann. Darüber hinaus wird der Begriff der Estrichschicht in der vorliegenden Beschreibung der Erfindung so verstanden, dass das Estrichmaterial zur Bildung der Estrichschicht aus jedem geeigneten Material sein kann.

Die Estrichschicht ist dabei vorzugsweise als großflächig ausgedehnte Schicht ausgebildet, die eine Hauptfläche mit großer Breite und Länge als Oberseite und eine zur Breite und Länge vergleichsweise geringe Dicke aufweist. Das Oberflächenprofil ist vorzugsweise so ausgebildet, dass die Rohr- bzw. Schlauchabschnitte im fertig gestellten Bodenbelag nahe der Oberfläche der Estrichschicht oder mittig im Schichtaufbau aus Estrichschicht und Verschlussschicht verlegt sind.

Das Oberflächenprofil mit den Rillen kann zumindest teilweise gleichzeitig mit der Ausbildung der Estrichschicht gebildet werden. Beispielsweise kann formbares, aber bereits formstabiles, körniges Material durch eine entsprechende Matrize in einer Form ausgebracht werden, in der bereits entsprechende Rillen vorgesehen sind, beispielsweise wenn das Estrichmaterial in Bahnen ausgebracht wird und die Rillen entlang der Ausbringungsrichtung verlaufen.

Alternativ kann während des Formens der Estrichschicht ein noch formbares, d.h. noch nicht ausgehärtetes Estrichmaterial geebnet, insbesondere gewalzt werden, während gleichzeitig in die zu ebnende Oberfläche des noch formbaren Estrichmaterials ein Oberflächenprofil eingebracht, insbesondere eingedrückt, wird.

Die Rillen könnten hierbei auch quer zur Ausbringungsrichtung vorgesehen werden, wenn beispielsweise eine nachlaufende Walze mit entsprechenden Oberflächenstegen zum Eindrücken von Rillen über das gerade ausgebrachte Estrichmaterial gerollt wird.

Entsprechend kann das Oberflächenprofil zumindest teilweise auch nach dem Formen der Estrichschicht in das noch formbare oder bereits ausgehärtete Estrichmaterial eingebracht werden. Beispielsweise wäre es denkbar, die entsprechenden Rillen des Oberflächenprofils nach Aushärten des Estrichmaterials in die Oberfläche einzufräsen.

Darüber hinaus kann auch eine Kombination von gleichzeitiger Ausbildung des Oberflächenprofils mit den Rillen während des Erstellens der Estrichschicht und nachfolgendes Erzeugen des Oberflächenprofils nach Fertigstellung der Estrichschicht bzw. Aushärtung der Estrichschicht realisiert werden.

Beispielsweise können Teile der Rillen, die von ihrer Form und Ausrichtung in einfacher Weise während des Ausbringens der Estrichschicht gebildet werden können gleichzeitig mit der Ausbildung der Estrichschicht geformt werden, während Bereiche des Oberflächenprofils, die schwierig während der Herstellung der Estrichschicht gebildet werden können, nachträglich eingebracht werden können.

Das Oberflächenprofil kann eine oder mehrere Rillen umfassen, die mäanderförmig verlaufen, so dass Bereiche des Oberflächenprofils Rillen aufweisen, die parallel zueinander ausgerichtet sein können. Die parallelen Rillen besitzen bevorzugt zwei Endbereiche, die sich insbesondere nahe des Randes der Estrichschicht befinden, die durch Rillenbögen oder quer verlaufende Rillen miteinander verbunden sind.

Diese Bögen oder quer verlaufenden Rillen können nach Ausbildung der Estrichschicht durch nachträgliche Einbringung von Schlitzen in die Oberfläche der Estrichschicht eingebracht werden.

Alternativ zur Ausbildung von parallelen Rillen ist es auch möglich, dass jeweils benachbarte Rillen unter einem bestimmten Winkel, insbesondere unter einem Winkel von kleiner 180°, zueinander ausgerichtet sind. Wiederum können die Endbereiche benachbarter Rillen über geeignete Rillenbögen oder Querrillen miteinander verbunden sein.

Die Rillen können auch so geformt sein, dass jeweils zwei benachbarte Enden von zwei oder mehr benachbarten Rillen aneinander angrenzen bzw. ineinander übergehen. Das Oberflächenprofil der Estrichschicht kann somit als eine Aneinanderreihung von V-Formen oder U-Formen ausgebildet sein, wobei beispielsweise bei einer Ausbringung des Estrichmaterials in mehreren nebeneinander liegenden Bahnen die entsprechenden Muster zur Ausbildung einer mäanderförmigen Rille oder einer Rille in Zick-Zack-Form miteinander korrespondieren können oder als Fortsetzung benachbarter Rillenabschnitte ausgebildet sein können. Somit ist keine zusätzliche Bearbeitung des Oberflächenprofils zur Verbindung von Rillen notwendig.

Die Rillen und/oder Schlitze im Oberflächenprofil der Estrichschicht können einen beliebigen Querschnitt aufweisen. Der Querschnitt ist vorzugsweise so gewählt, dass ein Rohrquerschnitt vollständig darin aufgenommen werden kann. Rechteckige oder teilkreisförmige, insbesondere halbkreisförmige, Querschnitte haben sich dabei als vorteilhaft erwiesen. Jedoch sind auch Querschnitte in Form eines halbierten Polygons denkbar.

Zur Formung der parallelen Rillen bzw. der linearen oder gewellten Rillen in das die Estrichschicht bildende, noch formbare Estrichmaterial kann beispielsweise eine Walze mit geeignet geformte Oberfläche, die vorzugsweise stegförmige Vorsprünge entlang des Walzenkörperumfangs aufweist, verwendet werden. Alternativ kann eine Formgebungsvorrichtung vorgesehen sein, die hinter der Walze hergezogen wird und für die Formung der Rillen sorgt.

Als Estrichmaterial kann jedes geeignete, körnige, pastöse oder flüssige Material, welches entsprechend fließfähig, rieselfähig oder in sonstiger Weise formbar und aushärtbar ist, Verwendung finden, wie beispielsweise Beton oder Asphalt.

Insbesondere Asphalt hat sich als vorteilhaft erwiesen, da die Estrichschicht als Asphalttragschicht ausgebildet werden kann und die Verschlussschicht nach Einbringen der Rohrleitung in das Oberflächenprofil als Asphaltbinderschicht oder als Asphaltdeckschicht ausgebildet werden kann. Bei Verwendung von Asphalt lässt sich die Oberflächenstruktur gut in die Asphaltschicht einbringen und die Rohrleitung kann dann in einfacher Weise in den Rillen bzw. der Oberflächenstruktur angeordnet werden.

Hierzu kann die Rohrleitung aus einem einzigen Rohrschlauch gebildet sein, der beispielsweise in eine einzige mäanderförmige Rille eingelegt wird oder die Rohrleitung kann aus entsprechenden Rohrabschnitten aufgebaut sein, die über Verbindungselemente miteinander verbunden werden, um eine Rohrleitung zu bilden, durch die ein Kühl- bzw. Heizmedium geleitet werden kann.

Bei der Verwendung von Asphalt als Estrichmaterial, insbesondere bei Ausbildung der Estrichschicht als Asphalttragschicht, kann die Rohrleitung nach dem Verlegen mit einem Trennmaterial bedeckt werden, welches hitzebeständig ist und/oder isolierende Eigenschaften aufweist. Darüber hinaus kann das Trennmaterial pulverförmig bzw. ebenfalls riesel- oder fließfähig sein, um beispielsweise in die Rillen bzw. Nuten der Oberflächenstruktur eingefüllt zu werden, um so die Rohrleitung zu bedecken und zu schützen. Insbesondere kann das Trennmaterial so eingefüllt werden, dass die Rillen der Oberflächenstruktur vollständig gefüllt sind. Beispielsweise kann als Trennmaterial Quarzsand verwendet werden. Durch das Trennmaterial ist die Rohrleitung bei der nachfolgenden Aufbringung einer Verschlussschicht, beispielsweise einer Asphaltbinderschicht oder einer Asphaltdeckschicht vor dem heißen Asphalt geschützt.

Zusätzlich oder alternativ kann die Rohrleitung beim Aufbringen der Verschlussschicht dadurch geschützt werden, dass bereits ein Fluid zur Stabilisierung und zur Kühlung oder zum Heizen, also zur Temperaturanpassung die Rohrleitung durchströmt, wobei das Fluid, beispielsweise Wasser, insbesondere unter Druck durch die Rohrleitung geleitet werden kann, sodass bei einem Aufbringen der Verschlussschicht und Verdichten der Verschlussschicht ein entsprechender Gegendruck vorhanden ist.

Im Fall von Beton als Estrichschicht kann ein warmes Fluid, insbesondere warmes Wasser, zur Beschleunigung des Aushärteprozesses von Beton durch die Rohre und/oder Schläuche geleitet werden.

Aufgrund der Rillen und gegebenenfalls Schlitze im Oberflächenprofil der Estrichschicht kann die Rohrleitung leicht in die Rillen des Oberflächenprofils verlegt werden, ohne dass zusätzliche Befestigungselemente wie beispielsweise Klammern oder Klemmschienen oder ähnliches nicht von Nöten sind. Die Rohr- und/oder Schlauchabschnitte werden dabei in die Rillen gelegt. Je nach Ausbildung der Rohrleitung kann anschließend ein Herstellungsschritt folgen, in dem die benachbarten Enden von jeweils zwei benachbarten Rohrabschnitten miteinander verbunden werden, wobei vorzugsweise geeignete Verbindungsstücke, wie gekrümmte Rohr- oder Schlauchstücke mit den Rohrabschnitten verbunden, insbesondere verschraubt bzw. angeflanscht, werden.

Auf einen solchen Verbindungsschritt kann verzichtet werden, wenn, wie bereits oben ausgeführt, Rohrleitungen verwendet werden, die flexibel ausgebildet sind und schlangenförmig in die Rillen der Estrichschicht verlegt werden. Die Rohrleitung kann beispielsweise aus Kunststoff, insbesondere Polyethylen, gebildet sein.

Die vorliegende Erfindung betrifft außerdem einen großflächigen, temperierbaren Bodenbelag, der gemäß dem beschriebenen Verfahren hergestellt ist.

Der erfindungsgemäße, großflächige, temperierte Bodenbelag kann als Belag für Hallen, insbesondere für Trocknungshallen, Veranstaltungshallen oder Fabrikhallen, aber auch als Fahrbahn- oder Rollbahnbelag verwendet werden.

Nach einem weiteren Aspekt der vorliegenden Erfindung, für den zusammen mit den anderen Aspekten der Erfindung als auch separat Schutz begehrt wird, kann ein entsprechender großflächiger Bodenaufbau bzw. Bodenbelag eine Dämm- und Isolierschicht aufweisen, die vorzugsweise unterhalb der Estrichschicht angeordnet ist. Die Dämm- und Isolierschicht ist aus Schaumglas gebildet, welches in einem Matrixkörper aus Glas- und/oder Keramik eine Vielzahl von Poren aufweist. Neben den Wärmedämmeigenschaften des Glas- und/oder Keramikmaterials besitzt Schaumglas sehr gute Wärmedämmeigenschaften aufgrund der Vielzahl von Poren, die in dem Material enthalten sind. Um diese Dämmeigenschaften auf Dauer zu erhalten, ist erfindungsgemäß vorgesehen, das Schaumglas feuchtigkeitsdicht zu kapseln, d. h. zu vermeiden, dass beispielsweise Erdfeuchte in das Schaumglas gelangen kann.

Vorzugsweise kann die Kapselung des Schaumglases auch wasserdicht ausgebildet sein, so dass selbst bei einem Aufstau von Regenwasser oder dergleichen eine Schaumglasschicht mit umgebendem Wasser seine Wärmedämmeigenschaften beibehalten kann, da vermieden wird, dass Wasser in das Schaumglas eindringt und die Poren mit Wasser gefüllt werden.

Die Verkapselung kann mit Kunststofffolien erfolgen, wobei insbesondere Polyethylenfolien eingesetzt werden können.

Schaumglas kann in Form von Schaumglasschotter, d. h. entsprechenden Partikeln aus Schaumglas, eingesetzt werden.

Je nach Bedarf und Anwendungsgebiet des temperierbaren Bodenbelags kann ferner eine Deckschicht auf die Estrich- oder Verschlussschicht aufgebracht werden. Die Deckschicht kann beispielsweise aus einem ästhetischen ansprechenden Material bestehen oder ein solches enthalten, beispielsweise Linoleum, Fliesen, Teppichboden, Parkett oder Laminat. Alternativ kann auch eine an den Verwendungszweck des Bodenbelags angepasste Beschichtung aufgebracht werden. Insbesondere für den Gebrauch im Außenbereich kann eine feinkörnige Schicht aufgebracht werden, um somit den Bodenbelag glatter zu gestalten.

### KURZBESCHREIBUNG DER FIGUREN

Die beigefügten Zeichnungen zeigen in rein schematischer Weise in
- Fig. 1: eine perspektivische Darstellung eines Bereichs einer Estrichschicht;
- Fig. 2a und b: jeweils eine Draufsicht auf eine profilierte Estrichschicht; und in
- Fig. 3: eine teilweise Schnittansicht einer profilierten Estrichschicht mit verlegten Rohren und Verschlussschicht.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Die Erfindung ist allerdings nicht auf diese Ausführungsbeispiele beschränkt.

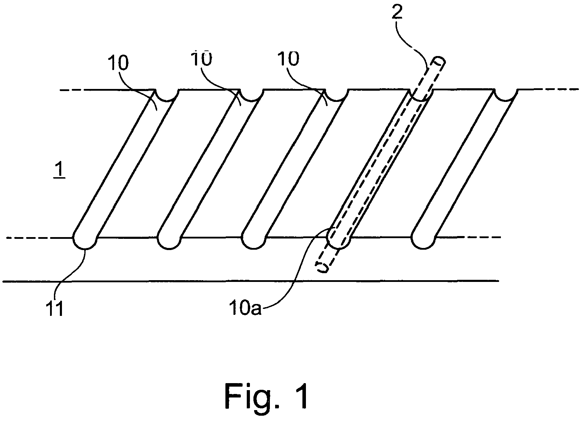

Fig. 1 zeigt einen Ausschnitt einer Estrichschicht 1, die auf ihrer Oberseite Rillen 10 mit einem halbkreisförmigen Querschnitt 11 aufweist. In die Rille 10a ist in gestrichelter Darstellung ein Rohrabschnitt 2 gezeigt, der in die Rille 10a eingelegt ist.

Die bahnförmige Estrichschicht 1, die in Fig. 1 gezeigt ist, könnte in dieser Weise beispielsweise durch einen Asphaltfertiger auf dem Untergrund aufgebracht werden, wobei beispielsweise durch eine nachlaufende Walze die Querrillen 10 eingedrückt werden können, wozu die Walze entsprechende Stege auf ihrer Umfangsfläche aufweisen kann. Statt der Querrillen 10 könnten jedoch auch Längsrillen (nicht gezeigt) in Längserstreckung der Bahn eingebracht werden.

Bei benachbarten Bahnen können einander entsprechende Rillen 10 ausgebildet werden, wobei an den Randbahnen, die also die Estrichschicht 1 begrenzen, U-förmige Rillen ausgebildet werden können oder die Rillen durch Querstege miteinander verbunden werden können, um eine mäanderförmige Rohrleitung ausbilden zu können.

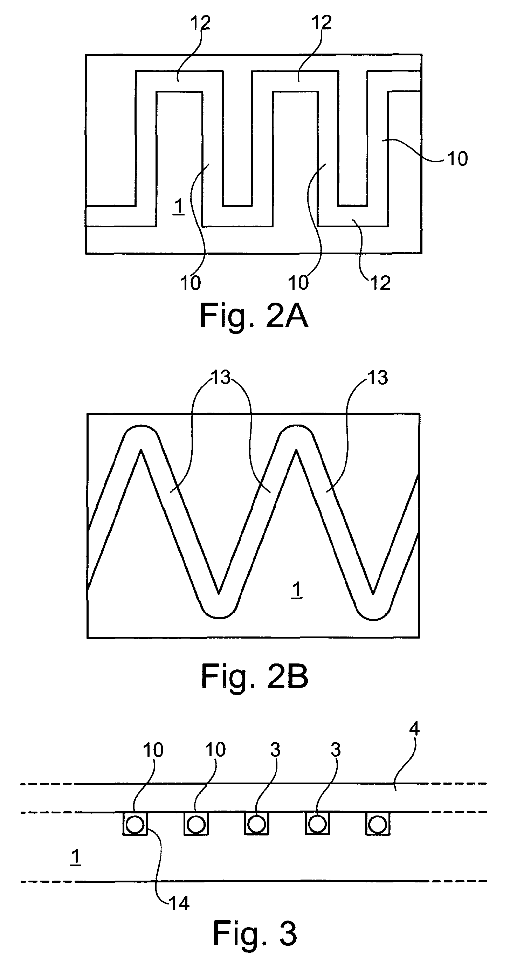

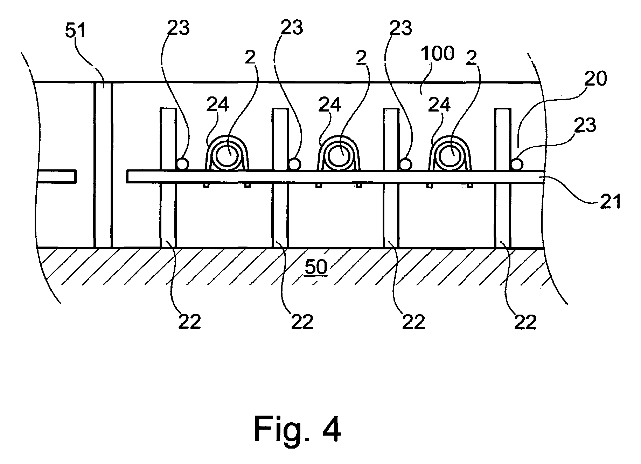

Die Figuren 2a und 2b zeigen jeweils eine Draufsicht auf einen Ausschnitt einer Estrichschicht 1, die parallel verlaufende Rillen 10 und senkrecht dazu gebildete Schlitze 12 als Profilierung aufweist, wobei jeweils zwei benachbarte Rillen 10 an einem Ende über die Schlitze 12 miteinander verbunden sind. Alternativ kann anstelle der Schlitze 12 auch eine halbkreisförmige Ausnehmung bzw. ein bogenförmiger Schlitz vorgesehen sein, um beispielsweise die Rohrleitung besser verlegen zu können.

Die Fig. 2b zeigt einen Ausschnitt aus einer Estrichschicht 1, wobei auf der Oberfläche Rillen 13 ausgebildet sind, die in einem bestimmten Winkel zueinander angeordnet sind und wobei zwei benachbarte Rillen 13 ineinander übergehen (siehe Abschnitt 14).

Fig. 3 zeigt nun einen Querschnitt durch eine Estrichschicht 1 mit Rillen 10, die einen rechteckigen Querschnitt aufweisen. In die Rillen 10 ist eine Rohrleitung 3 mit kreisförmigem Querschnitt verlegt.

Die Rillen 10 sind weiterhin mit einem Trennmaterial 15, zum Beispiel in Form von Quarzsand gefüllt, welcher die Rohrleitung 3 umgibt und bedeckt.

Auf der Estrichschicht 1 ist eine Verschlussschicht 4 angeordnet, die die Rillen 10 mit der Rohrleitung 3 und dem Trennmaterial 15 bedeckt und verschließt. Beispielsweise kann die Estrichschicht 1 eine Asphalttragschicht sein und die Verschlussschicht 4 eine Asphaltbinderschicht oder eine Asphaltdeckschicht.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne beschriebene Merkmale weggelassen oder andersartige Kombinationen von beschriebenen Merkmalen vorgenommen werden können, ohne dass der Schutzbereich der beigefügten Ansprüche verlassen wird. Insbesondere umfasst der Offenbarungsgehalt der vorliegenden Beschreibung sämtliche Kombinationen aller vorgestellter Merkmale.

## Patentansprüche

1. Verfahren zur Herstellung eines großflächigen, temperierbaren Bodenbelags, wobei der Bodenbelag mindestens eine Estrichschicht (1) enthält, in der mindestens eine Rohrleitung (3) zum Führen eines Fluids verlegt ist, welches die Schritte umfasst:
a) Formen einer Estrichschicht aus einem formbaren oder fließfähigen, körnigen oder flüssigen Material, die ein Oberflächenprofil mit einer Rille oder mehreren Rillen (10,12,13,14) aufweist;
b) Verlegen der Rohrleitung in die Rillen des Oberflächenprofils; und
c) Bilden einer Verschlussschicht (4) durch Bedecken der Rohrleitung mit einem Verschlussmaterial,
**dadurch gekennzeichnet, dass**
die Rohrleitung (3) beim Aufbringen der Verschlussschicht (4) von einem Fluid zur Stabilisierung und zur Kühlung oder zum Heizen der Rohrleitung durchströmt wird
und/oder dass
das Oberflächenprofil zumindest teilweise gleichzeitig mit dem Formen der Estrichschicht gebildet wird und/oder zumindest teilweise nach dem Formen der Estrichschicht in das noch formbare Estrichmaterial eingebracht wird.

2. Verfahren nach Anspruch 1,
**dadurch gekennzeichnet, dass**
das Oberflächenprofil zumindest teilweise nach dem Formen der Estrichschicht in das ausgehärtete Estrichmaterial eingebracht wird.

3. Verfahren nach einem der vorhergehenden Ansprüche,
**dadurch gekennzeichnet, dass**
die Rillen (10) zumindest teilweise als lineare Nuten in Richtung der Aufbringungsrichtung des Estrichmaterials oder quer dazu ausgebildet werden, wobei insbesondere die linearen Nuten (10,12,13) so gebildet werden, dass jeweils benachbarte Nuten parallel zueinander angeordnet sind oder unter einem bestimmten Winkel, insbesondere einem Winkel von kleiner 180°, zueinander ausgerichtet sind.

4. Verfahren nach einem der vorhergehenden Ansprüche,
**dadurch gekennzeichnet, dass**
jeweils benachbarte Enden von zwei linearen Nuten (10,13) durch Quernuten (12) oder bogenförmige Nuten (14) verbunden werden.

5. Verfahren nach einem der vorhergehenden Ansprüche,
**dadurch gekennzeichnet, dass**
die Estrichschicht (1) als Asphalttragschicht und/oder die Verschlussschicht (4) als Asphaltbinderschicht oder als Asphaltdeckschicht ausgebildet sind und/oder die Rohrleitung (3) nach dem Verlegen mit einem Trennmaterial (15), insbesondere einem hitzebeständigen und/oder isolierenden und/oder pulverförmigen Material, vorzugsweise Quarzsand bedeckt werden.

6. Verfahren nach einem der vorhergehenden Ansprüche,
**dadurch gekennzeichnet, dass** das Fluid unter Druck durch die Rohrleitung geleitet wird.

7. Verfahren nach einem der vorhergehenden Ansprüche,
**dadurch gekennzeichnet, dass**
die Estrichschicht und das Estrichmaterial aus Beton oder Asphalt gebildet sind.

8. Großflächiger, temperierbarer Bodenbelag hergestellt nach einem Verfahren nach einem der Ansprüche 1 bis 7.

9. Bodenbelag nach Anspruch 8,
**dadurch gekennzeichnet, dass**
die Rohrleitungen (3) aus einem Kunststoff, insbesondere Polyethylen gebildet sind oder einen solchen Stoff enthalten und/oder eine Dämm- und Isolierschicht aus Schaumglas vorgesehen ist, die feuchtigkeitsdicht gekapselt ist, insbesondere mit Kunststofffolien, vorzugsweise Polyethylenfolien eingeschweißt ist.

10. Verwendung des großflächigen, temperierbaren Bodenbelags nach Anspruch 8 oder 9 als Bodenbelag für Hallen, insbesondere für Trocknungshallen, Veranstaltungshallen oder Fabrikhallen, oder als Fahrbahn- oder Rollbahnbelag.

## Claims

1. A method for producing a large-area, heatable floor covering, wherein the floor covering contains at least one screed layer (1) in which is laid at least one pipeline (3) for transporting a fluid, which comprises the steps of:
a) forming a screed layer from a malleable or fluent, granular or liquid material, which has a surface profile having one or multiple grooves (10, 12, 13, 14);
b) laying the pipeline in the grooves of the surface profile; and
c) forming a sealing layer (4) by covering the pipe with a sealing material,
**characterised in that,**
during application of the sealing layer (4), a fluid flows through the pipe (3) for the purpose of stabilizing and cooling or heating the pipeline and/or that
the surface profile is formed at least partially at the same time as the forming of the screed layer and/or is at least partially incorporated into the still malleable screed material after the forming of the screed layer.

2. Method according to claim 1,
**characterised in that**
the surface profile is at least partially incorporated into the hardened screed material after the forming of the screed layer.

3. Method according to any of the preceding claims,
**characterised in that**
the grooves (10) are configured at least partially as linear grooves in the direction of an application of the screed material or transversely thereto, wherein especially the linear grooves (10, 12, 13) are each formed such that adjacent grooves are disposed in parallel with each other or are aligned with each other at a certain angle, especially an angle of less than 180°.

4. Method according to any of the preceding claims,
**characterised in that**
adjacent ends of two linear grooves (10, 13) are each connected by transverse grooves (12) or arcuate grooves (14).

5. Method according to any of the preceding claims,
**characterised in that**
the screed layer (1) is configured as an asphalt base course and/or the sealing layer (4) as asphalt binder course or asphalt surface course and/or the pipeline (3) after installation is covered with a release material (15), especially a heat-resistant and/or insulating and/or powdery material, preferably quartz sand.

6. Method in accordance with any of the previous claims,
**characterised in that**
the fluid is fed under pressure through the pipeline.

7. Method according to any of the preceding claims,
**characterised in that**
the screed layer and the screed material are formed from concrete or asphalt.

8. Large-area, heatable floor covering produced by a method according to any of claims 1 to 7

9. Floor covering according to claim 8,
**characterised in that**
the pipelines (3) are formed from a polymer, especially polyethylene, or contain such material, and/or an insulation course made from foam glass is provided, which is encapsulated so as to be moisture-tight, especially with polymer film, preferably polyethylene film.

10. Use of the large-area, heatable floor covering according to claim 8 or 9 as floor covering for halls, in particular for drying halls, events halls or factory halls, or as a surface for roads or runways.

## Revendications

1. Procédé pour la fabrication d'un revêtement de sol tempérable de grande surface, le revêtement de sol contenant au moins une couche de chape (1) dans laquelle au moins une tuyauterie (3) est posée pour conduire un fluide, procédé qui comprend les étapes :
a) façonnage d'une couche de chape à partir d'un matériau façonnable ou fluide, granuleux ou liquide, qui présente un profil de surface avec une rainure ou plusieurs rainures (10, 12, 13, 14) ;
b) pose de la tuyauterie dans les rainures du profil de surface et
c) formation d'une couche de fermeture (4) en couvrant la tuyauterie avec un matériau de fermeture,
**caractérisé en ce que**
la tuyauterie (3) est traversée, lors de l'application de la couche de fermeture (4), par un fluide pour la stabilisation et pour le refroidissement ou pour le chauffage de la tuyauterie
et/ou que
le profil de surface est formé au moins partiellement en même temps que le moulage de la couche de chape et/ou au moins est appliqué au moins partiellement après le moulage de la couche de chape dans le matériau de la chape encore façonnable.

2. Procédé selon la revendication 1, **caractérisé en ce que** le profil de surface est appliqué au moins partiellement après le façonnage de la couche de chape dans le matériau de chape durci.

3. Procédé selon l'une des revendications précédentes, **caractérisé en ce que** les rainures (10) sont configurées au moins partiellement comme des gorges linéaires en direction du sens d'application du matériau de chape ou transversalement par rapport à celui-ci, cepnedant qu'en particulier les gorges linéaires (10, 12, 13) sont formées de telle manière que des gorges respectivement voisines sont placées parallèlement l'une à l'autre ou sont orientées en formant un certain angle l'une par rapport à l'autre, en particulier un angle de moins de 180°.

4. Procédé selon l'une des revendications précédentes, **caractérisé en ce que** des extrémités respectivement voisines de deux gorges linéaires (10, 13) sont reliées par des gorges transversales (12) ou des gorges en forme d'arc.

5. Procédé selon l'une des revendications précédentes, **caractérisé en ce que** la couche de chape (1) est configurée comme une couche porteuse en asphalte et/ou la couche de fermeture (4) comme une couche de liaison en asphalte ou comme une couche de couverture en asphalte et/ou la tuyauterie (3) est recouverte, après la pose, avec un matériau de séparation (15), en particulier avec un matériau résistant à la chaleur et/ou isolant et/ou poudreux, de préférence en sable quartzeux.

6. Procédé selon l'une des revendications précédentes, **caractérisé en ce que** le fluide est conduit sous pression à travers la tuyauterie.

7. Procédé selon l'une des revendications précédentes, **caractérisé en ce que** la couche de chape et le matériau de chape sont formés en béton ou en asphalte.

8. Revêtement de sol tempérable de grande surface fabriqué selon un procédé selon l'une des revendications 1 à 7.

9. Revêtement de sol selon la revendication 8, **caractérisé en ce que** les tuyauteries sont formées en une matière plastique, en particulier en polyéthylène ou contiennent une telle matière et/ou qu'il est prévu une couche calorifuge ou isolante en verre cellulaire qui est encapsulée de manière étanche à l'humidité, en particulier qui est soudée avec des feuilles de matière plastique, de préférence des feuilles de polyéthylène.

10. Utilisation du revêtement de sol tempérable de grande surface selon la revendication 8 ou la revendication 9 comme revêtement de sol pour des halles, en particulier pour des serres de séchage, des salles de spectacles ou des hangars industriels ou comme revêtement de chaussée ou de voie de circulation.
